# EUROPÄISCHE PATENTSCHRIFT

(11) **EP 0 239 829 B1**
(45) Veröffentlichungstag und Bekanntmachung des Hinweises auf die Patenterteilung: **23.06.1993**
(21) Anmeldenummer: 87103123.3
(22) Anmeldetag: 05.03.1987
(51) Int. Cl.: A47J 43/046

(54) **Rühr- und Knetwerkzeug**
Mixing and kneading device
Outil mélangeur-pétrisseur

(30) Priorität: 29.03.1986 DE 3610740
(43) Veröffentlichungstag der Anmeldung: 07.10.1987
(73) Patentinhaber: Braun Aktiengesellschaft, Frankfurt am Main (DE)
(72) Erfinder: Klawuhn, Manfred, D-6000 Frankfurt 1 (DE); Franke, Wolfgang, D-6070 Langen (DE); Hickel, Sigrun, D-6273 Waldems (DE); Kullen, A. Prof. Dr., D-8031 Wörthsee-Steinbach (DE)

(56) Entgegenhaltungen:
- EP-A- 222 121
- DE-A- 1 554 642
- DE-A- 3 144 438
- DE-B- 1 052 079
- GB-A- 976 230
- GB-A- 1 145 576
- US-A- 3 201 095
- US-A- 3 362 693

## Beschreibung

Die Erfindung betrifft ein Rühr- und Knetwerkzeug zum Einsatz im Zentrum eines Mischbehälters einer elektrisch angetriebenen Haushaltsmaschine, welches eine mindestens zwei unterschiedlich geformte Einzelwerkzeuge tragenden Nabe aufweist, die über eine vorzugsweise durch den Behälterboden geführte Antriebswelle antreibbar ist.

Derartige Rühr- und Knetwerkzeuge werden für die Durchmischung und das Kneten von zähflüssigem bis teigigem oder auch körnigem Gut bzw. Mischungen dieser Güter verwendet. Dabei besteht die Besonderheit, daß immer wieder mit ein und demselben Rühr- und Knetwerkzeug Massen recht unterschiedlicher Konsistenz bearbeitet werden müssen, was bedeutet, daß der Antrieb für dieses Werkzeug in seiner Leistung für die denkbar zäheste zu bearbeitende Masse ausgelegt werden muß oder aber mit entsprechenden Sicherungseinrichtungen versehen werden muß, um eine Überlastung und Beschädigung beim Bearbeiten von zäheren Massen als vorgesehen zu vermeiden. Derartige Sicherungseinrichtungen sind aber aufwendig und bringen eine zusätzliche Störanfälligkeit der Haushaltsmaschine mit sich.

Ein besonderes Problem in Verbindung mit dem Rühren und Kneten von teigigen Massen bildet das Beimischen von körnigen oder granulatartigen Zusatzstoffen, wie. z.B. das Beimischen von Mandelsplittern, Rosinen oder dergleichen, zu einem Kuchenteig. Die beigemischten Zutaten sollen einerseits gut durchgemischt werden, was einen intensiven Mischvorgang voraussetzt, und andererseits dürfen sie von den Einzelwerkzeugen, also beispielsweise den Rührarmen der Nabe, nicht zerdrückt oder zerschlagen werden. Aus diesem Grunde ist es deshalb bekannt, bei einem Rühr- und Knetwerkzeug die Nabe mit unterschiedlichen Einzelwerkzeugen auszurüsten, die beim Rühr-, Misch- und Knetvorgang unterschiedliche Funktionen in der zu bearbeitenden Masse ausüben.

So ist beispielsweise durch die DE-15 54 642 A1 ein mehrarmiges Rühr- und Knetwerkzeug bekannt geworden, das für den Einsatz in der Rührschüssel einer elektrisch angetriebenen Haushaltsmaschine geeignet ist. Bei diesem vorbekannten Rühr- und Knetwerkzeug ist der Mischbehälter derart geformt, daß in seinem Zentrum ein Innendom für die Lagerung einer senkrecht angeordneten und von unten angetriebenen Antriebswelle gebildet ist. An dem oberen Ende der Antriebswelle, die an dem Dom nach oben hindurchtritt, ist eine Nabe kuppelbar, welche einen oder mehrere von oben in den Mischbehälter geführte und entgegen der Umlaufrichtung der Nabe zurückgebogene Knetarme trägt. Dabei ist mindestens ein Knetarm als ein an die Kontur des Innendoms angepaßter, dünner Arm ausgebildet, der über den Boden des Mischbehälters geführt wird. Bei der Drehbewegung wird dabei das Rührgut jeweils kurzzeitig vom Innendom abgehoben und legt sich unmittelbar nach dem Durchgang des Knetarms wieder an die Wand des Innendoms an. Bei zähen oder teigigen Massen führt dies dazu, daß das Rührgut an der Wand des Innendoms hochsteigt und von dort in die Nabe des Rührwerkzeugs eindringen kann, was unbedingt vermieden werden sollte.

Um ein Hochkriechen des Rührgutes zu verhindern, ist bei der vorbekannten Ausführungsform an der Nabe als weiteres Einzelwerkzeug ein Abstreiferflügel angebracht, der in radialer Richtung sowie entgegen der Umlaufrichtung der Nabe zurückgebogen ist. Dieser Abstreiferflügel hat die Aufgabe, das beim Umrühren in den oberen Bereich des Innendoms gelangende Rührgut wieder nach unten zu drücken. Das hier gezeigte Rühr- und Knetwerkzeug ist für die Bearbeitung von besonders teigigen Massen nur bedingt geeignet. Die zwar dünnen, sich aber nahezu über die gesamte Höhe des Mischbehälters erstreckenden Rühr- und Knetwerkzeuge würden beim Durchdringen eines besonders zähen und teigigen Gutes ein sehr hohes Drehmoment an der Antriebswelle erforderlich machen und dies auch deshalb, weil sie weit entfernt von der Nabe verlaufen.

Ein weiteres Beispiel für ein mit verschiedenen Einzelwerkzeugen ausgestattetes Rührwerkzeug zeigt die EP-0 091 825 A1. Das in der genannten Durckschrift gezeigt Rührwerkzeug ist vorwiegend für die Herstellung von Soft-Eis aus gefrorenen Eisstücken einsetzbar. Im Zentrum eines Behälters ist dabei eine durch dessen Boden geführte Antriebsquelle vorgesehen. Auf die Antriebswelle ist eine mit dieser kuppelbare Nabe aufgesetzt, auf die ihrerseits in ihrem oberen Bereich eine mit radialen Schneiden ausgestattete, horizontal angeordnete Scheibe aufgesetzt werden kann. Die Nabe trägt ein Rührwerkzeug in Form von zwei U-förmigen Drahtbügeln, die beim Drehen der Nabe mit ihren unteren Bügelabschnitten das in Nähe des Behälterbodens sich befindliche Gut durchmischen. Das zu bearbeitende Gut wird über einen oberhalb der Scheibe angeordneten Einfüllstutzen zugeführt. Beim Drehen der Nabe wird das eingefüllte Gut zunächst durch die in der Scheibe radial angebrachten Schneiden verkleinert und fällt dann auf den Boden des Gefäßes. Auch bei dieser Ausführungsform eines Rührwerkzeuges sind zur Bearbeitung von teigigen Massen hohe Drehmomente notwendig, da es Drahtabschnitte aufweist, die zum einen nahzu über die gesamte Höhe des Mischbehälters und die zum anderen weit von der Nabe entfernt verlaufen.

Aus der DE-31 44 438 A1 ist weiterhin ein Rühr- und Knetwerkzeug zum Einsatz im Zentrum eines Behälters einer elektrisch angetriebenen Haushaltsmaschine bekannt, an dem an einer Nabe im unteren Bereich als Schneid- und Rührwerkzeuge Messer und im oberen Bereich zum Kneten von Teig Rippen angebracht sind. Mit diesem Arbeitswerkzeug ist es also einerseits möglich, Nahrungsmittel zu zerkleinern und/oder Nahrungsmittel zu verrühren.

Aus der nicht vorveröffentlichten EP-A-0 222 121 ist für eine gattungsgemäße Haushaltsmaschine eine Schneid- und Mischwerkzeug bekannt, das in seinem unteren Bereich messerartig ausgebildete Schneidwerkzeuge und in seinem oberen Bereich Knetelemente aufweist.

Aufgabe der Erfindung ist es daher, ein Rühr- und Knetwerkzeug anzugeben, das eine Bearbeitung auch von besonders zähen und teigigen Massen bei optimalem Knetergebnis zuläßt, das für eine Beimischung von festen Zutaten besonders geeignet ist, durch das beim Durchmischen auch sehr zäher Massen eine Überlastung des Antriebs - auch ohne Vorhandensein eines elektrischen Überwachungsschalters - sicher vermieden wird und das mit einer geringen Antriebsleistung betrieben werden kann.

Diese Aufgabe wird für ein Rühr- und Knetwerkzeug nach dem Oberbegriff des Patentanspruchs 1 durch die im kennzeichenden Teil dieses Patentanspruchs enthaltenen Merkmale gelöst.

Das mit der Erfindung offenbarte Rühr- und Knetwerkzeug weist eine von einer Antriebswelle motorisch angetriebene Nabe auf, die senkrecht im Zentrum eines Behälters angeordnet ist. Die Nabe trägt einen oder mehrere seitlich abstehende Rührarme, die beim Drehen in der Nähe des Behälterbodens parallel zu diesem geführt werden. Als weiteres Werkzeug sind an der Nabe in ihrem oberen Bereich ein oder mehrere seitlich in den Arbeitsraum ragende Knetflügel vorgesehen. Während beim Drehen die über den Boden des Behälters geführten Rührarme zum Durchmengen der Teigmasse und Beimischen von verschiedenen Zutaten dienen, dienen die darüber angeordneten Knetflügel zum Durchkneten der durchmischten teigigen Massen.

Der Durchmesser der Nabe im Bereich der Rührarme ist größer als im Bereich der Knetflügel. Dadurch wird beim Kneten eine nach oben gerichtete Kraft auf den Teig ausgeübt und ein Absinken der teigigen Masse auf den Boden des Behälters verhindert bzw. die Masse immer wieder nach oben transportiert. Ein Teigklumpen wird also beim Knetvorgang zwischen der Innenwand des Behälters und den an der Außenwand der Nabe ausgebildeten Knetelementen durchgeknetet. Hierdurch wird bei optimalem Knetergebnis die Beanspruchung des Motors nicht unerwünscht hoch. Für die Nabe hat sich eine vom Fuß aus verjüngende konische Formgebung als besonders vorteilhaft erwiesen. Im Interesse eines guten Durchmischens sind die Rührarme entgegen der Drehrichtung der Nabe gebogen. Die Rührarme sind derart elastisch nachgiebig ausgebildet, daß die beim Knetvorgang auf die Rührarme einwirkenden Kräfte in vorgegebenen Grenzen gehalten werden, so daß die sich hieraus ergebenden Drehmomemte an der Antriebswelle nicht überschritten werden.

Durch die Rührarme werden die sich am Boden des Behälters befindlichen Zutaten ständig vermengt, hochgewirbelt und so von unten den darüber befindlichen teigigen Massen zugemengt. Aufgrund der Form der Rührarme wird verhindert, daß feste Zutaten, wie z.B. Rosinen oder Nüsse, zwischen den Rührarmen und dem zu knetenden Teig zerdrückt oder zerquetscht werden. Durch die elastisch nachgiebige Ausbildung der Rührarme wird weiterhin erreicht, daß bei einem an sich unbeabsichtigten Absinken von teigigen Massen auf den Boden des Behälters der Antriebsmotor nicht überlastet oder gar zum Stillstand abgebremst wird, da der Bewegungswiderstand bei Bewegung der Rührarme (1, 8) in der zu durchmischenden oder knetenden Masse einen vorgegebenen Wert nicht übersteigt.

In einer Weiterbildung der Erfindung (Anspruch 2) ist vorgesehen, daß die Rührarme unterschiedlich lang sind, so daß die äußeren Enden der Rührarme - in radialer Richtung gesehen - auf unterschiedlichen Durchmessern liegen. Dies führt zu einem guten Durchmischen der Nahrungsmittel.

Eine weitere Verbesserung der Rührwirkung (Anspruch 3) ergibt sich auch dann, wenn die Rührarme zum Boden des Behälters leicht geneigt verlaufen. Sind die Rührarme zum Behälterboden in einem Winkel von 2° geneigt, so ergeben sich besonders gute Rühreigenschaften. Sind dabei noch die radial äußeren Enden der Rührarme nach oben zur Einfüllöffnung des Behälters abgewinkelt, so werden auch die oberhalb der parallel zum Behälterboden verlaufenden Rührarmabschnitte sich befindenden Nahrungsmittel noch erfaßt, wodurch die Rührwirkung nochmals erhöht wird.

Damit die Rührarme besonders elastisch nachgiebig sind, was den Bewegungswiderstand des Rühr- und Knetwerkzeuges in vorgegebenen Grenzen hält, sind sie aus Federstahldraht hergestellt. Um dabei Korrosion zu vermeiden, ist es vorteilhaft, wenn der Federstahldraht aus rostfreiem Material besteht (Anspruch 4).

Um die Rührwirkung zu erhöhen, sind gemäß Anspruch 5 die radial äußeren Enden der Rührarme nach oben zur Einfüllöffnung des Behälters abgewinkelt.

Dadurch, daß - entsprechend Anspruch 6 - jeweils zwei Rührarme aus einem einzigen Stück Draht geformt sind, daß der Draht ein Mittelstück aufweist, welches mit der Nabe fest verbunden ist, daß das Mittelstück aus zwei innerhalb der Nabe nach oben zur Einfüllöffnung des Behälters geführten Stegen und aus einem Bügel besteht, der die beiden Stege miteinander verbindet, und daß die Stege sich über die Nabe nach oben hinaus erstrecken, so daß der Bügel vollständig außerhalb der Nabe verläuft, wird eine komplizierte Montage des Rühr- und Knetwerkzeuges vermieden. Die Rührarme sind hierdurch derart elastisch ausgebildet, daß der Bewegungswiderstand beim Bewegen der Rührarme in der zu durchmischenden oder zu durchknetenden Masse einen vorgegebenen Wert nicht übersteigt.

Besonders gute Knetergebnisse bei einfacher Herstellung des Rühr- und Knetwerkzeuges werden dadurch erreicht, daß die Knetflügel von Rippen gebildet werden, die parallel zur Längsachse der Nabe verlaufen und daß die Nabe und die Rippen einteilig aus Kunststoff gespritzt oder gegossen sind (Anspruch 7).

Um das Rührergebnis des Rühr- und Knetwerkzeuges noch zu verbessern, sind zwei Rippen vorhanden, die auf der Nabe einander diametral gegenüberliegend angebracht sind (Anspruch (8).

Eine weitere Rühr- und Knetverbesserung wird dadurch erreicht, daß zusätzlich zu den Rippen und den Rührarmen am unteren Ende am Knetwerkzeug Schaufeln angeordnet sind (Anspruch 9). Die Schaufeln dienen einerseits als Rührelemente und andererseits als die Nahrungsmittel nach außen befördernde Elemente. Dabei ist es vorteilhaft, wenn die Schaufeln radial nach außen weiter hervorstehen als die Rippen und wenn die Schaufeln um 90° versetzt zu den Rippen am Knetwerkzeug angeordnet sind (Anspruch 10).

Im folgenden wird in Verbindung mit der anliegenden Zeichnung eine vorteilhafte Realisierungsform eines Rühr- und Knetwerkzeuges nach der Erfindung erläutert.

In der Zeichnung zeigen:
- Fig. 1: schematisch eine Seitenansicht einer Haushaltsmaschine mit einem Rühr- und Knetwerkzeug, geschnitten gemäß der Linie I - I in Fig. 2 und
- Fig. 2: eine Draufsicht auf das Rühr- und Knetwerkzeug aus einer Ebene gemäß der Schnittlinie II - II in Fig. 1.

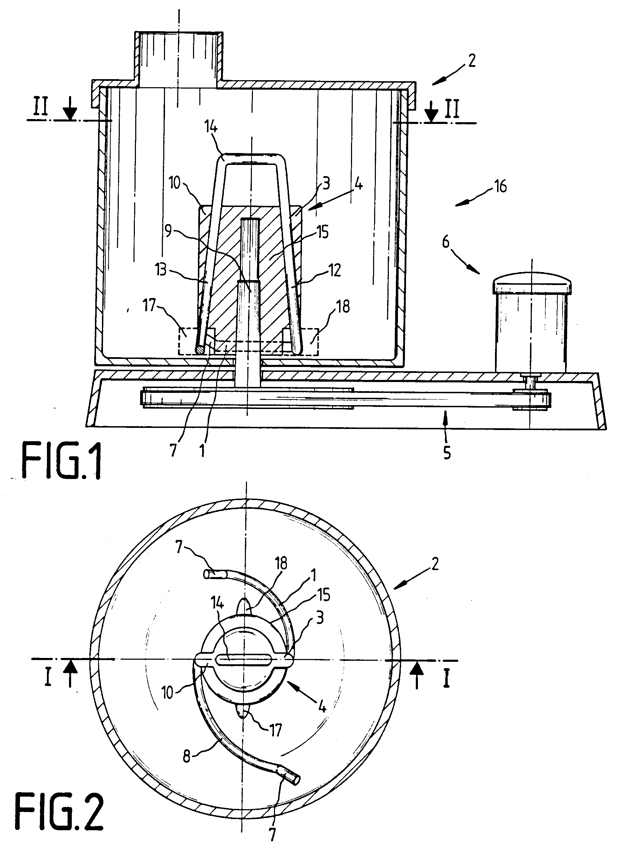

Die Fig. 1 zeigt ein Haushaltsgerät 16 in einer geschnittenen Seitenansicht, mit einem Antriebsmotor 6, der über ein durch einen Riementrieb gebildetes Untersetzungsgetriebe ein pauschal mit 4 bezeichnetes Rühr- und Knetwerkzeug über eine Welle 9 antreibt, die senkrecht im Zentrum eines Mischbehälters 2 angeordnet und dichtend durch den Boden dieses Behälters 2 geführt ist. Das Rühr- und Knetwerkzeug 4 ist entweder fest oder aufsetz- und kuppelbar auf der Antriebswelle 9 befestigt.

Das Rühr- und Knetwerkzeug besteht aus einer sich nach oben verjüngenden konischen Nabe 15, an der im unteren Bereich zwei stabförmige Rührarme 1 und 8 befestigt sind. Dabei erstrecken sich die Rührarme 1 und 8 im wesentlichen parallel zum Behälterboden. Sie besitzen im Interesse eines guten Durchmischens unterschiedliche Längen und sind entgegen der Drehrichtung der Nabe 15 gebogen. Um die Rührwirkung zu erhöhen, sind an den freien Enden der Rührarme 1 und 8 nach oben abgewinkelte Rührstäbe 7 angebracht. Die Rührarme 1, 8 sind zum Behälterboden in einem Winkel von etwa 2 Grad geneigt, so daß der radial äußere Teil der Arme 1, 8 einen größeren Abstand vom Boden aufweist, als der Abschnitt im Bereich der Nabe 15.

Die Rührarme bestehen aus einem elastischen Material, so daß sie je nach der beim Rühren auf sie einwirkenden Kraft mehr oder weniger zurückgebogen werden, wodurch sich ihre wirksame, auf die zu durchmischende Masse einwirkende Fläche so verändert, daß ein gewisses Drehmoment nicht überschritten wird. Die aus Federstahl bestehenden Stäbe 12, 13 bilden zusammen mit den Armen 1, 8 eine Einheit und sind durch den Körper der Nabe 15 des Rühr- und Knetwerkzeuges 4 in Form von Stegen 12 und 13 nach oben geführt, wobei sie im Interesse, das Rührwerkzeug zum Herausnehmen einfach anfassen zu können, über die Nabe 15 hinaus bis zu einem Bügel 14 geführt sind. Durch diese Ausgestaltung wird eine komplizierte Montage mit federndem Schwenkmechanismus der einzelnen Rührarme 1, 8 vermieden, da die Drehung selbst von dem Stahldraht elastisch aufgenommen wird.

Im oberen Bereich, also oberhalb der Rührarme 1 und 8 sind zwei als zusätzliche Knetwerkzeuge dienende Rippen 3 und 10 vorgesehen. Diese Rippen 3, 10 ragen diametral in den Mischbereich des Behälters hinein.

Die von oben in den Behälter 2 eingebrachte, teigige Masse wird beim Drehen der Nabe 15 von den als Knetwerkzeugen dienenden Rippen 3 und 10 zwischen der Innenwand des Behälters und der Außenwand der Nabe 15 durchgeknetet. In Folge der sich nach oben verjüngenden konischen Formgebung der Nabe 15 selbst wird auf den Teig eine nach oben zur Öffnung des Behälters hin gerichtete Kraft ausgeübt, die den Teig bei der Bearbeitung in der Schwebe hält und so verhindert, daß der Teig in den Bereich der Rührarme 1 und 8 absinkt. Die in der Nähe des Behälterbodens geführten Rührarme 1 und 8 dienen dazu, die vorher in den Behälter eingegebenen Zutaten, wie z.B. Mandeln oder Rosinen zu durchmischen und dabei aufzuwirbeln, so daß sie von dem darüber befindlichen Teig aufgenommen werden. Die am unteren Ende des Knetwerkzeuges angebrachten Schaufeln 17, 18 stehen radial nach außen weiter hervor als die Rippen 3, 10 und verlaufen um 90° versetzt zu den Rippen 3, 10. Die Schaufeln 17, 18 dienen einerseits zusätzlich als Rührelemente und andererseits als die Nahrungsmittel nach außen befördernde Elemente.

Die Erfindung wurde anhand eines konkreten Ausführungsbeispiels erläutert. Für den auf dem Fachgebiet Tätigen ist ersichtlich, daß zum Lösen der gestellten Aufgabe eine Reihe von Abwandlungen möglich sind, die im Rahmen der Erfindung, wie durch die Ansprüche definiert ggfs. realisiert werden können.

So können beispielsweise die Rührarme auch in anderer Art an der Nabe des Rühr- und Knetwerkzeuges 4 befestigt werden. Auch andere Formgebungen der Rührarme, z.B. mit einem rechteckigen Querschnitt unterschiedlicher Seitenlänge, wobei über eine Torsionsbeanspruchung die jeweils wirksame Fläche zum Durchmischen je nach Gegenkraft dem wirksamen Drehmoment angepaßt wird, sind realisierbar. Auch andere Anpassungen des Widerstandes der Rührarme, beispielsweise durch Veränderung der Oberflächen zwischen kantig und rund sind möglich.

Auch die Knetflügel 3,10 können je nach Bedarf in Anzahl, Form und Oberfläche unterschiedlich gestaltet werden.

## Patentansprüche

1. Rühr- und Knetwerkzeug (4) zum Einsatz im Zentrum eines Mischbehälters (2) einer elektrisch angetriebenen Haushaltsmaschine (16), welches eine mindestens zwei unterschiedlich geformte Einzelwerkzeuge (1, 8, 3, 10) tragende Nabe (15) aufweist, die über eine vorzugsweise durch den Behälterboden geführte Antriebswelle (9) antreibbar ist,
**dadurch gekennzeichnet,**
daß die Nabe (15) in ihrem unteren Bereich einen größeren Durchmesser als in ihrem oberen Bereich aufweist, daß im unteren Bereich der Nabe (15) mindestens zwei von ihr weggerichtete und sich nur in der Nähe des Bodens erstreckende und annähernd parallel zu diesem geführte Rührarme (1, 8) ausgebildet sind, daß jeder Rührarm (1, 8) im wesentlichen über seine gesamte Länge eine gegen die Drehrichtung der Nabe (15) gerichtete Biegung aufweist, daß die Rührarme (1, 8) elastisch nachgiebig ausgebildet sind, so daß der Bewegungswiderstand bei Bewegung der Rührarme (1, 8) in der zu durchmischenden oder knetenden Masse einen vorgegebenen Wert nicht übersteigt und daß im oberen Bereich der Nabe (15) mindestens zwei von ihr weggerichtete Knetflügel (3, 10) vorgesehen sind.

2. Rühr- und Knetwerkzeug nach Anspruch 1,
**dadurch gekennzeichnet,**
daß die Rührarme (1, 8) zum Boden des Behälters leicht geneigt verlaufen und dabei einen Winkel von etwa 2° bilden.

3. Rühr- und Knetwerkzeug nach Anspruch 1,
**dadurch gekennzeichnet,**
daß die Rührarme (1, 8) aus rostfreiem Federstahldraht hergestellt sind.

4. Rühr- und Knetwerkzeug nach Anspruch 1,
**dadurch gekennzeichnet,**
daß die radial äußeren Enden (7) der Rührarme (1, 8) nach oben zur Einfüllöffnung des Behälters (2) abgewinkelt sind.

5. Rühr- und Knetwerkzeug nach Anspruch 1,
**dadurch gekennzeichnet,**
daß jeweils zwei Rührarme (1, 8) aus einem einzigen Stück Draht geformt sind, daß der Draht ein Mittelstück (13, 14) aufweist, welches mit der Nabe (15) fest verbunden ist, daß das Mittelstück (12, 13, 14) aus zwei innerhalb der Nabe (15) nach oben zur Einfüllöffnung des Behälters (2) geführten Stegen (12, 13) und aus einem Bügel (14) besteht, der die beiden Stege (12, 13) miteinander verbindet, und daß die Stege (12, 13) sich über die Nabe (15) nach oben hinaus erstrecken, so daß der Bügel (14) vollständig außerhalb der Nabe (15) verläuft.

6. Rühr- und Knetwerkzeug nach Anspruch 1,
**dadurch gekennzeichnet,**
daß die Knetflügel von Rippen (3, 10) gebildet werden, die parallel zur Längsachse der Nabe (15) verlaufen und daß die Nabe (15) und die Rippen (3, 10) einteilig aus Kunststoff gespritzt oder gegossen sind.

7. Rühr- und Knetwerkzeug nach Anspruch 6,
**dadurch gekennzeichnet,**
daß zwei Rippen (3, 10) vorhanden sind, die auf der Nabe (15) einander diametral gegenüberliegend angebracht sind.

8. Rühr- und Knetwerkzeug nach Anspruch 7,
**dadurch gekennzeichnet,**
daß zusätzlich zu den beiden Rippen (3, 10) und den Rührarmen (1, 8) am unteren Ende der Nabe (15) zwei Schaufeln (17, 18) angeordnet sind.

9. Rühr- und Knetwerkzeug nach Anspruch 8,
**dadurch gekennzeichnet,**
daß die beiden Schaufeln (17, 18) radial nach außen weiter hervorstehen als die beiden Rippen (3, 10) und daß die beiden Schaufeln (17, 18) um 90° versetzt zu den Rippen (3, 10) am Knetwerkzeug (4) angeordnet sind.

## Claims

1. Agitating and kneading tool (4) for being inserted into the centre of a mixing bowl (2) of an electrically driven household appliance (16) comprising a hub (15), to which at least two differently shaped single tools (1, 8, 3, 10) are fitted and which is drivable by a drive shaft (9) which preferably extends through the container bottom,
characterized in that the hub (15) in its bottom area has a larger diameter than in its upper area, in that in the bottom area of the hub (15) at least two agitating arms (1, 8) are provided which point away from it and extend only close to the bottom and roughly in parallel thereto, in that each agitating arm (1, 8) substantially over its entire length has a bending directed against the direction of rotation of the hub (15), in that the agitating arms (1, 8) are of elastically yielding design so that the motional resistance on moving of the agitating arms (1, 8) in the matter to be blended or kneaded will not exceed a predetermined value, and in that in the upper area of the hub (15) at least two kneading blades (3, 10) are provided which extend away from it.

2. Agitating and kneading tool as claimed in claim 1,
characterized in that the agitating arms (1, 8) extend slightly inclined towards the bottom of the container and form an angle of approximately 2°.

3. Agitating and kneading tool as claimed in claim 1,
characterized in that the agitating arms (1, 8) are made of a rustproof spring steel wire.

4. Agitating and kneading tool as claimed in claim 1,
characterized in that the radially outside ends (7) of the agitating arms (1, 8) are angled off upwardly towards the feed opening of the container (2).

5. Agitating and kneading tool as claimed in claim 1,
characterized in that two agitating arms (1, 8) are formed of one single piece of wire in each case, in that the wire has an intermediate portion (13, 14) which is rigidly coupled to the hub (15), the said intermediate portion (12, 13, 14) being comprised of two webs (12, 13) extending within the hub (15) upwardly to the feed opening of the container (2), and of a bracket (14) interconnecting the two webs (12, 13), and in that the webs (12, 13) extend upwardly beyond the hub (15) so that the bracket (14) extends completely outside of the hub (15).

6. Agitating and kneading tool as claimed in claim 1,
characterized in that the kneading blades are formed of ribs (3, 10) which extend in parallel to the longitudinal axis of the hub (15), and in that the hub (15) and the ribs (3, 10) are integrally sprayed or cast from plastics.

7. Agitating and kneading tool as claimed in claim 6,
characterized in that two ribs (3, 10) are provided which are fitted to the hub (15) lying diametrally opposite to each other.

8. Agitating and kneading tool as claimed in claim 7,
characterized in that two scoops (17, 18) are arranged in addition to the two ribs (3, 10) and the agitating arms (1, 8) at the bottom end of the hub (15).

9. Agitating and kneading tool as claimed in claim 8,
characterized in that the two scoops (17, 18) project farther radially outwardly than the two ribs (3, 10), and in that the two scoops (17, 18) are arranged offset by 90° relative to the ribs (3, 10) on the agitating tool (4).

## Revendications

1. Outil de brassage et de pétrissage (4) destiné à être utilisé au centre d'un récipient de malaxage (2) d'un appareil ménager (16) entraîné électriquement, qui comprend un moyeu (15) portant au moins deux outils élémentaires (1, 8, 3, 10) conformés différemment, qui peut être mû par l'intermédiaire d'un arbre d'entraînement (9) traversant de préférence le fond du récipient, caractérisé en ce que
le moyeu (15) présente dans sa zone inférieure un plus grand diamètre que dans sa zone supérieure, qu'au moins deux bras de brassage (1, 2) sont formés dans la zone inférieure du moyeu (15), bras qui sont dirigés dans le sens de leur éloignement du moyeu et s'étendent seulement à proximité du fond, à peu près parallèlement à celui-ci, que chaque bras (1, 8) possède une courbure s'étendant essentiellement sur toute sa longueur et dirigée contrairement au sens de rotation du moyeu (15), que les bras (1, 8) sont élastiques, de manière que la résistance rencontrée pendant le mouvement des bras (1, 2) dans la masse à brasser ou à pétrir ne dépasse pas une valeur préfixée, et qu'au moins deux palettes de pétrissage (3, 10) sont prévues dans la région supérieure du moyeu (15), palettes qui sont dirigées dans le sens de leur éloignement du moyeu.

2. Outil de brassage et de pétrissage selon la revendication 1, caractérisé en ce que les bras (1, 8) sont légèrement inclinés par rapport au fond du récipient et forment avec ce fond un angle d'environ 2°.

3. Outil de brassage et de pétrissage selon la revendication 1, caractérisé en ce que les bras (1, 8) sont fabriqués de fil en acier inoxydable pour ressorts.

4. Outil de brassage et de pétrissage selon la revendication 1, caractérisé en ce que les extrémités radialement extérieures (7) des bras (1, 8) sont coudées vers le haut en direction de l'ouverture de remplissage du récipient (2).

5. Outil de brassage et de pétrissage selon la revendication 1, caractérisé en ce que chaque fois deux bras de brassage (1, 8) sont formés d'un seul morceau de fil, que le fil comporte un tronçon central (13, 14) relié de façon fixe au moyeu (15), que le tronçon central (12, 13, 14) est constitué de deux montants (12, 13) s'étendant à l'intérieur du moyeu (15) vers le haut, en direction de l'ouverture de remplissage du récipient (2), ainsi que d'un étrier (14) qui relie les deux montants (12, 13) entre eux, et que les montants (12, 13) s'étendent vers le haut au-delà du moyeu (15), de sorte que l'étrier (14) se trouve complètement en dehors du moyeu (15).

6. Outil de brassage et de pétrissage selon la revendication 1, caractérisé en ce que les palettes de pétrissage sont formées par des nervures (3, 10) qui s'étendent parallèlement à l'axe longitudinal du moyeu (15) et que le moyeu (15) et les nervures (3, 10) sont moulées par injection ou coulés d'un seul tenant en matière plastique.

7. Outil de brassage et de pétrissage selon la revendication 6, caractérisé en ce qu'il comprend deux nervures (3, 10) disposées diamétralement l'une en face de l'autre sur le moyeu (15).

8. Outil de brassage et de pétrissage selon la revendication 7, caractérisé en ce que, en plus des deux nervures (3, 10) et des bras de brassage (1, 8), deux aubes (17, 18) sont disposées sur l'extrémité inférieure du moyeu (15).

9. Outil de brassage et de pétrissage selon la revendication 8, caractérisé en ce que les deux aubes (17, 18) font davantage saillie radialement vers l'extérieur que les deux nervures (3, 10) et que les deux aubes (17, 18) sont disposées sur l'outil de malaxage (4) avec un décalage de 90° par rapport aux nervures (3, 10).
